# EUROPÄISCHE PATENTSCHRIFT

(11) **EP 0 914 561 B1**
(45) Veröffentlichungstag und Bekanntmachung des Hinweises auf die Patenterteilung: **13.10.2004**
(21) Anmeldenummer: 98919061.6
(22) Anmeldetag: 07.03.1998
(51) Int. Cl.: F04B 53/16, F04B 1/04

(54) **KOLBENPUMPE MIT ROHRSTÜCK ALS LAUFBUCHSE**
PISTON PUMP WITH A PIPE SEGMENT AS A BUSHING
POMPE A PISTONS AVEC SECTION DE TUBE COMME DOUILLE

(30) Priorität: 21.05.1997 DE 19721227
(43) Veröffentlichungstag der Anmeldung: 12.05.1999
(73) Patentinhaber: ROBERT BOSCH GMBH, 70442 Stuttgart (DE)
(72) Erfinder: ALAZE, Norbert, D-71706 Markgröningen (DE); MEGERLE, Friedrich, D-71679 Asperg (DE); SCHÄFER, Ernst-Dieter, D-74336 Brackenheim (DE); SCHULLER, Wolfgang, D-74343 Sachsenheim (DE); SCHNALZGER, Günther, D-87544 Blaichach (DE); ZITZELSBERGER, Ralf, D-87616 Marktoberdorf (DE); BAUR, Gerd, D-87549 Rettenberg (DE); HELLEBRANDT, Michael, D-87545 Burgberg (DE)
(86) Internationale Anmeldenummer: PCT/DE1998/000686
(87) Internationale Veröffentlichungsnummer: WO 1998/053209

(56) Entgegenhaltungen:
- EP-A- 0 761 967
- WO-A-96/28661
- DE-A- 4 301 124
- DE-C- 395 400
- US-A- 1 592 266
- PATENT ABSTRACTS OF JAPAN vol. 096, no. 010, 31. Oktober 1996 & JP 08 144937 A (HITACHI CONSTR MACH CO LTD), 4. Juni 1996

## Beschreibung

### Stand der Technik

Die Erfindung betrifft eine Kolbenpumpe mit den Merkmalen des Oberbegriffs des Anspruchs 1.

Eine derartige Kolbenpumpe ist beispielsweise aus der US 1,592,266 A bereits bekannt. Diese bekannte Kolbenpumpe umfasst einen zu einer hin- und hergehenden Hubbewegung antreibbaren Kolben, der in einer rohrförmigen Laufbuchse axial verschieblich aufgenommen ist. Die Laufbuchse ist mit radialem Abstand in einem Zylinder verankert. Dazu dient ein am Außenumfang der Laufbuchse angeordnetes, axial vorspannbares Haltelement. Das Haltelement fixiert zum einen die Laufbuchse im Zylinder und bewirkt zum anderen eine Abdichtung zwischen Laufbuchsenaußenseite und Zylinderwandinnenseite. Die beiden Enden der Laufbuchse sind zu getrennten Druckkammern hin offen.

Kolbenpumpen, die insbesondere zur Verwendung als Pumpen für eine Fahrzeugbremsanlage mit einer Blockierschutz-, Antriebsschlupf-, Fahrdynamikregeleinrichtung und/oder für eine Fremdkraftbremsanlage eines Kraftfahrzeugs vorgesehen sind, sind beispielhaft aus der DE 40 27 794 A1 und aus der DE 44 07 978 A1 bekannt. Diese Kolbenpumpen weisen ein Pumpengehäuse auf, in das eine Laufbuchse unbeweglich eingesetzt ist, in der ein Kolben axial verschieblich aufgenommen ist. Diese Laufbuchse der bekannten Kolbenpumpen weist ein Sackloch in Form einer Stufenbohrung zur Aufnahme eines Kolbens und eines Auslassventils auf. Eine Außenseite der Laufbuchse ist mit einer Anzahl von Nuten, Hinterschneidungen und Stufen, beispielsweise zum Einlegen von Dichtringen oder als Anschlagfläche, vorgesehen. Die Laufbuchse ist ein Drehteil, dessen Herstellung aufgrund seiner Innen- und Außenform aufwändig und teuer in der Herstellung ist. Weiterer Nachteil ist, dass die Laufbuchse nach der spanenden Bearbeitung gehärtet werden muss, um ihren Verschleiß beim Betrieb der Kolbenpumpe niedrig zu halten und auf diese Weise eine ausreichende Standzeit zu erzielen.

### Vorteile der Erfindung

Die erfindungsgemäße Kolbenpumpe mit den Merkmalen des Anspruchs 1 weist ein die Zylinderbohrung nach außen verschließendes und in das Innere der Laufbuchse hineinragendes Element auf. Mit diesem Element wird gleichzeitig eine Lagefixierung der Laufbuchse, ein Verschluss der Zylinderbohrung und eine Trennung der Saugseite von der Druckseite der Kolbenpumpe realisiert. Aufgrund der Übertragung dieser unterschiedlichen Funktionen auf ein einziges Element werden Bauteile und Montageaufwand eingespart.

Die der vorliegenden Erfindung zugrundeliegende Aufgabe besteht demnach darin, eine Kolbenpumpe mit weniger Bauteilen zu schaffen. Diese Aufgabe löst eine Kolbenpumpe mit den Merkmalen des Anspruchs 1.

Die Unteransprüche haben vorteilhafte Ausgestaltungen und Weiterbildungen der erfindungsgemäßen Kolbenpumpe zum Gegenstand.

### Zeichnung

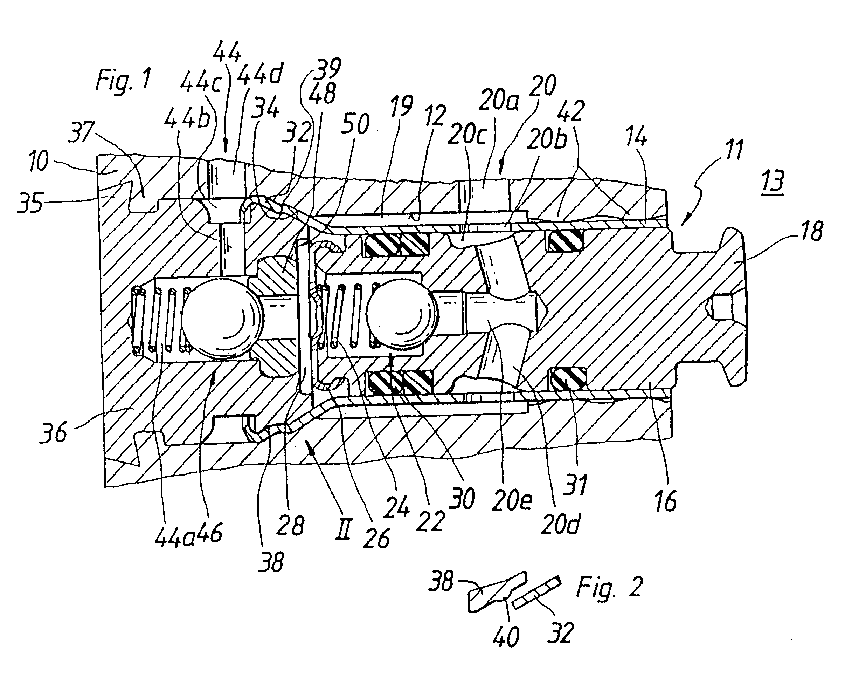

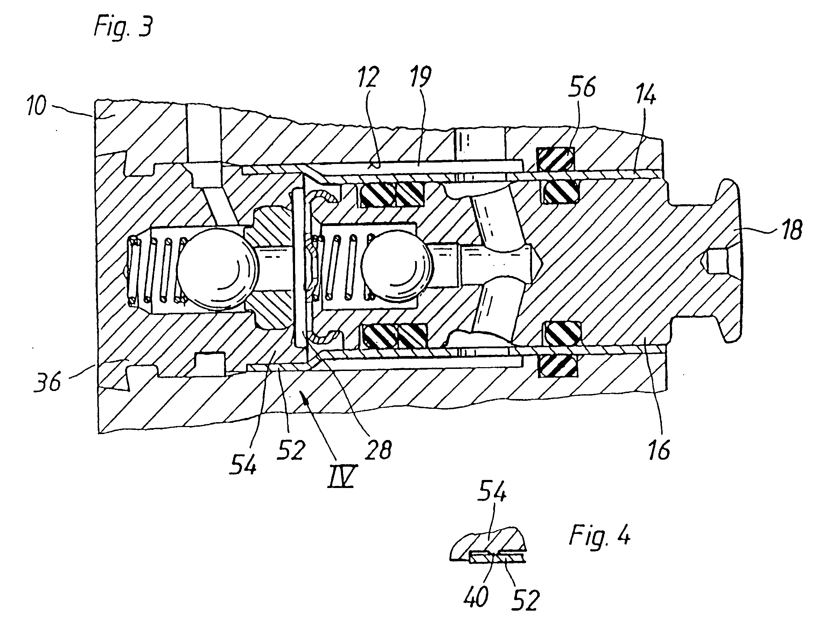

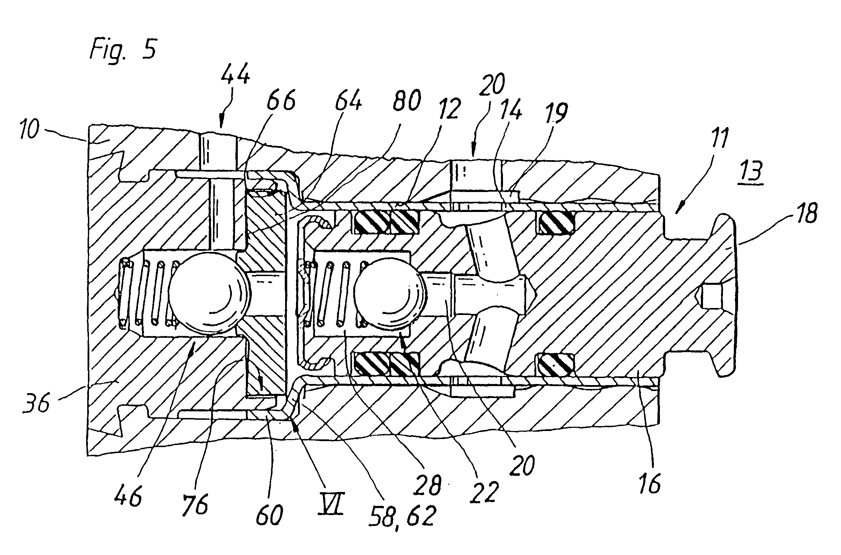

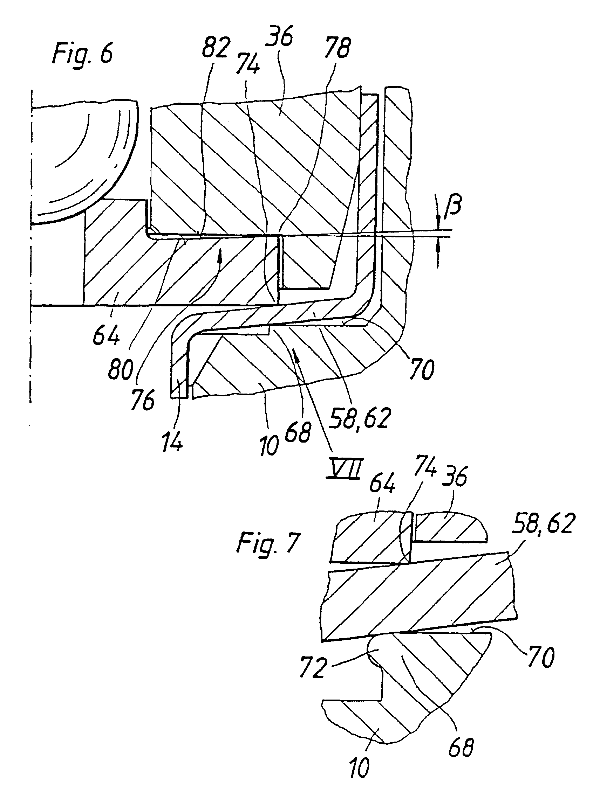

Die Erfindung wird nachfolgend anhand in der Zeichnung dargestellter Ausführungsbeispiele näher erläutert. Es zeigen Figur 1 einen Achsschnitt einer erfindungsgemäßen Kolbenpumpe, Figur 2 eine Einzelheitdarstellung einer abgewandelten Ausführungsform der Erfindung gemäß Pfeil II in Figur 1, Figur 3 einen Achsschnitt einer zweiten Ausführungsform der Erfindung, Figur 4 eine Einzelheitdarstellung gemäß Pfeil IV in Figur 3, Figur 5 einen Achsschnitt einer dritten Ausführungsform der Erfindung, Figur 6 eine Einzelheitdarstellung gemäß Pfeil VI in Figur 5 in größerem Maßstab und Figur 7 eine Einzelheitdarstellung gemäß Pfeil VII in Figur 6 in größerem Maßstab.

### Beschreibung des ersten Ausführungsbeispiels

Die in Figur 1 dargestellte, erfindungsgemäße Kolbenpumpe ist insbesondere als Rückförderpumpe in einer Bremsanlage eines Fahrzeugs mit einer Radschlupfregelung vorgesehen. Mit der Radschlupfregelung kann beispielsweise ein Blockieren der Räder des Fahrzeugs während eines Bremsvorgans und/oder ein Durchdrehen der angetriebenen Räder des Fahrzeugs bei starkem Beschleunigen verhindert werden.

Die erfindungsgemäße Kolbenpumpe weist als Pumpengehäuse 10 einen Hydraulikblock auf, in den außer der Kolbenpumpe als Rückförderpumpe für eine schlupfgeregelte Fahrzeugbremsanlage weitere, nicht dargestellte hydraulische Baukomponenten zur Schlupfregelung eingesetzt und hydraulisch miteinander und mit der Kolbenpumpe verschaltet sind. Von dem das Pumpengehäuse 10 bildenden Hydraulikblock ist in der Zeichnung nur ein die wesentlichen Teile der erfindungsgemäßen Kolbenpumpe zeigendes Bruchstück dargestellt. Die Kolbenpumpe umfaßt ein oder mehrere, vorzugsweise zwei, in dem Pumpengehäuse 10 aufgenommene Pumpenelemente 11. Der besseren Übersichtlichkeit wegen ist nur ein Pumpenelement 11 dargestellt. Das Pumpengehäuse 10 umschließt einen Innenraum 13, in dem ein nicht dargestellter Exzenterantrieb vorgesehen ist.

In eine von einer Außenseite des Pumpengehäuses 10 bis in den Innenraum 13 verlaufende, abgestuft ausgeführte Zylinderbohrung 12 des Pumpengehäuses 10 ist ein Rohrstück als Laufbuchse 14 eingesetzt, in der ein Kolben 16 axial verschieblich aufgenommen ist. Ein Kopf 18 des Kolbens 16, der zum Antreiben des Kolbens 16 zu einer hin- und hergehenden Hubbewegung in an sich bekannter Weise mittels des nicht dargestellten Exzenterantriebs vorgesehen ist, steht auf einer Seite in den Innenraum 13 des Pumpengehäuses 10 vor. In einem Bereich zwischen den beiden Enden der Laufbuchse 14 ist ein Innendurchmesser der Zylinderbohrung 12 größer als ein Außendurchmesser der Laufbuchse 14, so daß in diesem Bereich zwischen der Laufbuchse 14 und dem Pumpengehäuse 10 ein Radialabstand 19 frei bleibt.

Die Kolbenpumpe hat einen Pumpeneinlaß 20. Zum Pumpeneinlaß 20 gehören im wesentlichen ein in dem Pumpengehäuse 10 angebrachter Einlaßkanal 20a, der Radialabstand 19, eine durch die Wandung der Laufbuchse 14 führende Querbohrung 20b, . ein am Außenumfang des Kolbens 16 vorgesehener Einstich 20c und mindestens eine den Einsich 20c mit einer im Kolben 16 angebrachten, axialen Stufenbohrung 20e verbindende Querbohrung 20d. In die zum Pumpeneinlaß 20 gehörende axiale Stufenbohrung 20e des Kolbens 16 ist ein federbelastetes Kugelrückschlagventil als Einlaßventil 22 eingesetzt, dessen Ventilschließfeder 24 sich an einer Blechkappe 26 abstützt, die auf eine einem Verdrängungsraum 28 zugewandte Stirnseite des Kolbens 16 aufgesetzt und durch Umbördeln befestigt ist.

In Abweichung zum dargestellten Ausführungsbeispiel kann das Einlaßventil 22 anstatt im Kolben 16 auch in dem Einlaßkanal 20a des Pumpengehäuses 10 vorgesehen sein. Ein Führungsspalt zwischen dem verschiebbaren Kolben 16 und der Laufbuchse 14 ist mit zwei O-Ringen als Dichtringe 30, 31 abgedichtet. Einer der beiden Dichtringe 30 trennt den Pumpeneinlaß 20 von dem Verdrängungsraum 28, der andere Dichtring 31 trennt den Pumpeneinlaß 20 vom Innenraum 13 des Pumpengehäuses 10.

Ein die Verdrängungskammer 28 umschließendes Ende der Laufbuchse 14 weist eine konische Aufweitung 32 auf, die an einer komplementären Erweiterung 34 der Zylinderbohrung 12 anliegt. Die Laufbuchse 14 mit ihrer konischen Aufweitung ist als Tiefziehteil ähnlich wie ein Becher oder dgl. hergestellt. Sie kann nach dem Tiefziehen gehärtet werden.

Zum Verschluß der Zylinderbohrung 12 auf der Seite des Verdrängungsraums 28 ist ein Verschlußstopfen in sog. Self-Clinch-Technik in die Zylinderbohrung 12 fest eingesetzt. Self-Clinch bedeutet ein durch Einpressen des Verschlußstopfens bewirktes Verstemmen: Der Verschlußstopfen weist einen umlaufenden, nach außen überstehenden Radialflansch 35 mit scharfkantigem Querschnitt an seiner dem Kolben 16 abgewandten Außenseite auf. Dieser Radialflansch 35 des aus Stahl durch Drehen hergestellten Verschlußstopfens verformt das aus weicherem Werkstoff, beispielsweise Aluminiumdruckguß, bestehende Pumpengehäuse 10 plastisch in eine umlaufende Ringnut 37 des Verschlußstopfens hinein, die sich auf einer dem Kolben 16 zugewandten Seite unmittelbar an den Radialflansch 35 anschließt, wenn der Verschlußstopfen mit ausreichend großer Kraft axial gegen das Pumpengehäuse gedrückt wird. Die plastische Verformung des Werkstoffs des Pumpengehäuses 10 in die Ringnut 37 des Verschlußstopfens hinein bewirkt eine sichere Abdichtung zwischen Verschlußstopfen und Pumpengehäuse 10 und eine große Haltekraft.

Der Verschlußstopfen bildet ein Befestigungselement 36 für die Laufbuchse 14. Er weist einen zur Aufweitung 32 der Laufbuchse 14 komplementären Konus 38 auf, der in der Aufweitung 32 einliegt und diese nach außen gegen die Erweiterung 34 der Zylinderbohrung 12 drückt. Dadurch ist die Laufbuchse 14 im Pumpengehäuse 10 fixiert und an ihrem den Verdrängungsraum 28 umschließenden Ende sowohl gegen das Pumpengehäuse 10 als auch gegen das Befestigungselement 36 abgedichtet. Zur sicheren Abdichtung weist der Konus 38 des Befestigungselements 36 eine axiale Ringstufe 39 und die Erweiterung 34 der Zylinderbohrung 12 eine komplementäre Gegenstufe auf, in die die Ringstufe 39 des Befestigungselements die Aufweitung 32 der Laufbuchse 14 elastisch/plastisch hineinverformt.

Eine weitere Möglichkeit zur sicheren Abdichtung ist den Konus 38 des Befestigungselements 36 mit einem umlaufenden Dichtwulst 40 vorzusehen, wie er in Figur 2 dargestellt ist, der sich beim Einsetzen des Befestigungselements 36 in die Zylinderbohrung 12 durch Andrücken an die Aufweitung 32 der Zylinderbuchse 14 elastisch und/oder plastisch verformt. Die Werkstoffe von Laufbuchse 14 und Befestigungselement 36 haben in etwa die gleiche Härte.

Die Kolbenpumpe hat einen Pumpenauslaß 44. Der Pumpenauslaß 44 umfaßt im wesentlichen eine in dem Befestigungselement 36 angebrachte koaxiale Sackbohrung 44a, einen am Außenumfang des Befestigungselements 36 vorgesehenen umlaufenden Einstich 44c, mindestens eine die Sackbohrung 44a mit dem Einstich 44c verbindende Querbohrung 44b und einen im Pumpengehäuse 10 vorgesehenen, vom Einstich 44c zu einem nicht dargestellten Hochdruckanschluß führenden Auslaßkanal 44d.

Auf der Seite des Kopfes 18 des Kolbens 16 weist das Pumpengehäuse 10 eine oder mehrere, vorzugsweise zwei umlaufende, flache und breite, in die Zylinderbohrung 12 hineinstehende Dichtwellen 42 auf. In diese Dichtwellen 42 ist die Laufbuchse 14 durch eine Preßpassung abdichtend eingesetzt. Durch die Preßpassung zwischen den radial nach innen vorstehenden Wellenkuppen der Dichtwellen 42 und dem Außenumfang der Laufbuchse 14 wird eine unzulässige Leckageverbindung für das von der Kolbenpumpe geförderte Fluid zwischen dem Pumpeneinlaß 20 und dem Innenraum 13 verhindert.

Im Mittelbereich der Laufbuchse 14 zwischen ihrer konischen Aufweitung 32 und den Dichtwellen 42 des Pumpengehäuses 10 weist die Zylinderbohrung 12 eine Spielpassung zur Laufbuchse 14 auf, d. h. im mittleren Bereich der Laufbuchse 14 besteht zwischen der Laufbuchse 14 und dem Pumpengehäuse 10 der Radialabstand 19, so daß sich die Laufbuchse 14 mit geringer Kraft in die Zylinderbohrung 12 einsetzen läßt, was insbesondere Beschädigungen der Laufbuchse 14 beim Einsetzen vermeidet. Weil die Pressung zwischen den Wellenkuppen der Dichtwellen 42 und dem Außenumfang der Laufbuchse 14, in Längsrichtung des Pumpenelements 11 betrachtet, nur sehr kurz ist, wird das Einsetzen der Laufbuchse 14 in das Pumpengehäuse 10 durch die Pressung im Bereich der Dichtwellen 42 nur unwesentlich behindert. Trotzdem wird eine sichere Abdichtung zwischen den beiden Enden der Laufbuchse 14 und dem Pumpengehäuse 10 erreicht, an dessen Dichtwellen 42 die Laufbuchse 14 mit ihrem einen Ende und an deren Erweiterung 34 sie mit der Aufweitung 32 an ihrem anderen Ende anliegt. Bei der erfindungsgemäß ausgeführten Kolbenpumpe mit dem Pumpenelement 11 in dem Pumpnengehäuse 10 ist ohne großen Aufwand der Pumpeneinlaß 20 gegen den Innenraum 13 einerseits und gegen den Pumpenauslaß 44 andererseits abgedichtet.

Zwischen die Laufbuchse 14 und das Pumpengehäuse 10 eingesetzte Dichtringe zum Abdichten der Laufbuchse 14 gegen das Pumpengehäuse 10 sind nicht notwendig. Dies hat den Vorteil einer Verringerung der Einzelteile der erfindungsgemäßen Kolbenpumpe, die Anzahl der Arbeitsgänge zum Montieren der Kolbenpumpe verringert.sich und die Laufbuchse 14 ist steifer im Pumpengehäuse 10 aufgenommen. Des weiteren verringert sich ein erforderlicher Bauraum der erfindungsgemäßen Kolbenpumpe durch die im Vergleich mit bekannten Laufbuchsen dünnwandige Laufbuchse 14.

Das Befestigungselement 36 weist die koaxiale Sackbohrung 44a auf, die sich an den Verdrängüngsraum 28 anschließt. In diese Sackbohrung 44a ist ein federbelastetes Kugelrückschlagventil als Auslaßventil 46 eingesetzt. Ein ringförmiger Ventilsitzkörper 48 des Auslaßventils 46 ist in eine Mündung der Sackbohrung 44a eingesetzt und durch Verstemmen (Bezugszahl 50) befestigt.

Wird der Kolben 16 durch den in dem Innenraum 13 des Pumpengehäuses 10 vorgesehenen Exzenterantrieb zu axialen hin- und hergehenden Hubbewegungen angetrieben, dann fördert das Pumpenelement 11 ein Fluid, vorzugsweise Bremsflüssigkeit, aus dem Pumpeneinlaß 20 durch das Einlaßventil 22 in den Verdrängungsraum 28 und von dort durch das Auslaßventil 46 in den Pumpenauslaß 44.

### Beschreibung des zweiten Ausführungsbeispiels

Die Laufbuchse 14 der in Figur 3 dargestellten, erfindungsgemäßen Kolbenpumpe weist eine zylindrische Aufweitung 52 an ihrem den Verdrängungsraum 28 umschließenden Ende auf, in das das Befestigungselement 36 mit einem angeformten zylindrischen Abschnitt 54 eingreift. Der Durchmesser des zylindrischen Abschnitts 54, die Wandstärke der Laufbuchse 14 und ein Durchmesser der Zylinderbohrung 12 sind so aufeinander abgestimmt, daß eine Presspassung zwischen dem zylindrischen Abschnitt 54 und der zylindrischen Aufweitung 52 sowie zwischen der zylindrischen Aufweitung 52 und der Zylinderbohrung 12 des Pumpengehäuses 10 besteht, d.h. der zylindrische Abschnitt 54 des Befestigungselements 36 drückt die Laufbuchse 14 an deren zylindrischer Aufweitung 52 gegen eine Wandung der Zylinderbohrung 12.

Zur Montage wird zunächst die Laufbuchse 14 auf das Befestigungselement 36 aufgepreßt, wobei die zylindrische Aufweitung 52 der Laufbuchse 14 elastisch aufgeweitet wird. Die elastisch aufgeweitete Aufweitung 52 der Laufbuchse 14 hat ein die Presspassung bewirkendes Übermaß in Bezug auf die Zylinderbohrung 12. Dadurch ist die Laufbuchse 14 im Pumpengehäuse 10 fixiert und es wird eine Abdichtung zwischen der Laufbuchse 14 und dem Pumpengehäuse 10 sowie dem Befestigungselement 36 bewirkt.

Der zylindrische Abschnitt 54 des Befestigungselements 36 weist vor dem Einsetzen des Befestigungselements 36 in die Zylinderbohrung 12 einen umlaufenden Dichtwulst 40 auf (Figur 4), der beim Einpressen des Zylinderabschnitts 54 in die Aufweitung 52 der Laufbuchse 14 elastisch und/oder plastisch verformt wird. Da die Laufbuchse 14 außerhalb der Zylinderbohrung 12 auf das Befestigungselement 36 aufgepreßt wird, weitet der Dichtwulst 40 die Laufbuchse 14 auf bzw. wird von der Laufbuchse 14 niedergedrückt, während die Laufbuchse 14 zusammen mit dem Befestigungselement 36 in die Zylinderbohrung 12 eingebaut wird, so daß er nicht abgeschert wird.

Im einfachsten Fall kann ein Rohrstück hohlzylindrischen Querschnitts, also ohne Aufweitung, als Laufbuchse 14 Verwendung finden, das mit dem Befestigungselement 36 in derselben Weise wie vorstehend beschrieben und in Figur 3 dargestellt im Pumpengehäuse 10 in axialer Richtung fixiert und abgedichtet wird (nicht dargestellt).

Auf der Seite des Kopfs 18 des Kolbens 16 erfolgt eine Abdichtung zwischen der Laufbuchse 14 und dem Pumpengehäuse 10 der in Figur 3 dargestellten Kolbenpumpe mit einem O-Ring 56 als Dichtring, der in eine in die Zylinderbohrung 12 des Pumpengehäuses 10 eingestochene Nut eingelegt ist. Die Abdichtung kann auch mit einer Dichtmasse oder mit Klebstoff erfolgen.

Im übrigen ist die in Figur 3 dargestellte Kolbenpumpe übereinstimmend mit der in Figur 1 dargestellten Kolbenpumpe aufgebaut und funktioniert in derselben Weise. Für gleiche Bauteile sind gleiche Bezugszahlen verwendet. Zur Vermeidung von Wiederholungen wird auf die entsprechenden Ausführungen zu Figur 1 verwiesen.

### Beschreibung des dritten Ausführungsbeispiels

Die Laufbuchse 14 der in Figur 5 dargestellten, erfindungsgemäßen Kolbenpumpe geht an ihrem den Verdrängungsraum 28 umschließenden Ende mit einer Ringstufe 58 in eine zylindrische Aufweitung 60 über. Eine Ringscheibenfläche 62, mit der die Laufbuchse 14 an ihrer Ringstufe 58 in die Aufweitung 60 übergeht, verläuft in einem spitzen Winkel zu einer gedachten Radialfläche, sie bildet einen flachen, stumpfwinkligen Konus.

Das in Self-Clinch-Technik in das dem Kolben 16 abgewandte Ende der Zylinderbohrung 12 eingesetzte Befestigungselement 36 drückt über ein Ventilsitzteil 64 die Laufbuchse 14 an ihrer Ringstufe 58 in axialer Richtung gegen eine komplementäre Ringstufe 66 der Zylinderbohrung 12 und fixiert dadurch die Laufbuchse 14 in axialer Richtung. Eine Abdichtung der Laufbuchse 14 gegen das Pumpengehäuse 10 erfolgt an einer umlaufenden Dichtstufe 68, die an einer einen Grund der Ringstufe 66 der Zylinderbohrung 12 bildenden radialen Ringscheibenfläche 70 ausgebildet ist (Figur 6). Durch das axiale Andrücken der Laufbuchse 14 mit ihrer Ringstufe 58 gegen die umlaufende Dichtkante 68 des Pumpengehäuses 10 verformt sich die Dichtkante 68 elastisch und/oder plastisch unter Bildung eines radial nach innen gerichteten Wulstes 72, wie in Figur 7 dargestellt, wodurch sich eine zuverlässige Abdichtung zwischen Laufbuchse 14 und Pumpengehäuse 10 ergibt.

Die Abdichtung zwischen dem Ventilsitzteil 64 und der Laufbuchse 14 erfolgt an einer umlaufenden Außenkante 74 des Ventilsitzteils 64, mit der das Ventilsitzteil 64 an einer Innenseite der Ringstufe 58 der Laufbuchse 14 anliegt.

Das Ventilsitzteil 64 liegt in einer zylindrischen Ausnehmung 76 in einer dem Kolben 16 zugewandten Stirnseite des Befestigungselements 36. Da das Befestigungselement 36 das Ventilsitzteil 64 in axialer Richtung gegen die Ringstufe 58 der Laufbuchse 14 drückt, ist das Ventilsitzteil 64 in der Ausnehmung 76 des Befestigungselements 36 fixiert, ohne daß es einer Verstemmung (vgl. Bezugszahl 50 in Figur 1) oder einer anderen Befestigungsmaßnahme bedarf.

Eine Abdichtung zwischen Ventilsitzteil 64 und Befestigungselement 36 erfolgt an einer umlaufenden Außenkante 78 des Ventilsitzteils 64, mit dem dieses an einem Grund 80 der Ausnehmung 76 anliegt (Figur 6). Um diese Außenkante 78 als Dichtkante auszubilden, weicht die Grundfläche 80 der Ausnehmung 76 des Befestigungselements 36 und/oder eine der Grundfläche 80 zugewandte Stirnfläche 82 des Ventilsitzteils 64 um einen spitzen Winkel β von einer gedachten Radialfläche ab.

Im übrigen ist die in Figur 5 dargestellte, erfindungsgemäße Kolbenpumpe übereinstimmend mit der in Figur 1 dargestellten Kolbenpumpe aufgebaut und funktioniert in derselben Weise. Es wird insoweit auf die entsprechenden Ausführungen zu Figur 1 verwiesen.

## Patentansprüche

1. Kolbenpumpe, insbesondere Pumpe für eine Fahrzeugbremsanlage, mit einem zu einer hin- und hergehenden Hubbewegung antreibbaren Kolben, der in einer Laufbuchse axial verschieblich aufgenommen ist, wobei die Laufbuchse in eine Zylinderbohrung eines Pumpengehäuses eingesetzt ist, **dadurch gekennzeichnet, dass** die Laufbuchse (14) ein Rohrstück mit im wesentlichen konstanter Wandstärke ist und dass ein die Zylinderbohrung (12) nach außen verschließendes, in das Innere der Laufbuchse (14) abschnittsweise hineinragendes Element (36) die Laufbuchse (14) an ihrem im Bereich eines Verdrängungsraums (28) der Kolbenpumpe befindlichen Ende dichtend und die Laufbuchse (14) in axialer Richtung fixierend gegen die Wandung der Zylinderbohrung (12) drückt.

2. Kolbenpumpe nach Anspruch 1, **dadurch gekennzeichnet, dass** die Laufbuchse (14) dünnwandig ist.

3. Kolbenpumpe nach Anspruch 1, **dadurch gekennzeichnet, dass** die Laufbuchse (14) im Bereich zumindest eines ihrer Enden dichtend an der Zylinderbohrung (12) anliegt und in ihrem Mittelbereich Spiel im Pumpengehäuse (10) aufweist.

4. Kolbenpumpe nach Anspruch 3, **dadurch gekennzeichnet, dass** die Laufbuchse (14) eine Aufweitung (32; 52; 60) an ihrem im Bereich des Verdrängungsraums (28) der Kolbenpumpe befindlichen Ende aufweist, die von dem in die Zylinderbohrung (12) eingesetzten Element (36) dichtend und die Laufbuchse (14) in axialer Richtung fixierend gegen eine komplementäre Erweiterung (34; 66) der Zylinderbohrung (12) gedrückt wird.

5. Kolbenpumpe nach Anspruch 4, **dadurch gekennzeichnet, dass** die Laufbuchse (14) eine Ringstufe (58) als Aufweitung aufweist, die in einer komplementären Ringstufe (66) als Erweiterung der Zylinderbohrung 12 einliegt und von dem in die Zylinderbohrung (12) eingesetzten Element (36) in axialer Richtung gegen eine umlaufende Dichtkante (68) gedrückt wird, die an einer radialen Ringscheibenfläche (70) der Ringstufe (66) der Zylinderbohrung (12) ausgebildet ist.

6. Kolbenpumpe nach Anspruch 5, **dadurch gekennzeichnet, dass** die Kolbenpumpe ein Rückschlagventil (46) aufweist, das dem Kolben (16) gegenüber im Verdrängungsraum (28) angeordnet ist und das ein Ventilsitzteil (64) aufweist, das zwischen dem in der Zylinderbohrung (12) eingesetzten Element (36) und der Ringstufe (58) der Laufbuchse (14) einliegt und von dem Element (36) in axialer Richtung gegen diese Ringstufe (58) gedrückt wird.

7. Kolbenpumpe nach Anspruch 6, **dadurch gekennzeichnet, dass** das Ventilsitzteil (64) eine umlaufende Dichtkante (74) aufweist, mit der es an der Ringstufe (58) der Laufbuchse (14) anliegt.

8. Kolbenpumpe nach Anspruch 6, **dadurch gekennzeichnet, dass** das Ventilsitzteil (64) eine umlaufende Dichtkante (78) aufweist, mit der es an dem Element (36) anliegt.

## Claims

1. Piston pump, in particular pump for a vehicle brake system, with a piston which can be driven in a reciprocating lifting movement and which is received axially displaceably in a bushing, the bushing being inserted into a cylinder bore of a pump casing, **characterized in that** the bushing (14) is a pipe segment with substantially constant wall thickness, and **in that** an element (36) closing the cylinder bore (12) outwardly and projecting partially into the interior of the bushing (14) presses the bushing (14), at the end of the latter located in the region of the displacement space (28) of the piston pump, against the wall of the cylinder bore (12) sealingly and so as to fix the bushing (14) in the axial direction.

2. Piston pump according to Claim 1, **characterized in that** the bushing (14) is thin-walled.

3. Piston pump according to Claim 1, **characterized in that** the bushing (14) bears, in the region of at least one of its ends, sealingly against the cylinder bore (12) and, in its middle region, has play in the pump casing (10).

4. Piston pump according to Claim 3, **characterized in that** the bushing (14) has, at its end located in the region of the displacement space (28) of the piston pump, a widening (32; 52; 60) which is pressed by the element (36) inserted into the cylinder bore (12) against a complementary widening (34; 66) of the cylinder bore (12) sealingly and so as to fix the bushing (14) in the axial direction.

5. Piston pump according to Claim 4, **characterized in that** the bushing (14) has, as a widening, an annular step (58) which is seated in a complementary annular step (66) as a widening of the cylinder bore (12) and which is pressed in the axial direction by the element (36) inserted into the cylinder bore (12) against a peripheral sealing edge (68) which is formed on a radial annular disc surface (70) of the annular step (66) of the cylinder bore (12).

6. Piston pump according to Claim 5, **characterized in that** the piston pump has a non-return valve (46) which is arranged opposite the piston (16) in the displacement space (28) and which has a valve-seat part (64) which is seated between the element (36) inserted in the cylinder bore (12) and the annular step (58) of the bushing (14) and this is pressed in the axial direction against this annular step (58) by the element (36).

7. Piston pump according to Claim 6, **characterized in that** the valve-seat part (54) has a peripheral sealing edge (74) with which it bears against the annular step (58) of the bushing (14).

8. Piston pump according to Claim 6, **characterized in that** the valve-seat part (64) has a peripheral sealing edge (78) with which it bears against the element (36).

## Revendications

1. Pompe à pistons, en particulier une pompe pour une installation de freinage d'un véhicule, comprenant un piston pouvant être entraîné dans un mouvement de linéaire de va-et-vient, en coulissant axialement dans une douille, la douille étant montée dans un alésage cylindrique d'un boîtier de pompe,
**caractérisée en ce que**
la douille (14) est une section de tube ayant une épaisseur de paroi essentiellement constante, et un élément (36) dépassant par endroits à l'intérieur de la douille (14) et refermant de façon étanche l'alésage cylindrique vers l'extérieur presse la douille (14) sur son extrémité située au niveau d'une chambre de refoulement (28) de la pompe à pistons de façon étanche, et pousse la douille (14) en direction axiale de fixation contre la paroi de l'alésage cylindrique (12).

2. Pompe à pistons selon la revendication 1,
**caractérisée en ce que**
la douille (14) a des parois minces.

3. Pompe à pistons selon la revendication 1
**caractérisée en ce que**
la douille (14) repose de façon étanche sur l'alésage cylindrique (12) au niveau d'au moins une de ses extrémités et présente, au niveau de son centre, un jeu dans le boîtier de pompe (10).

4. Pompe à pistons selon la revendication 3,
**caractérisée en ce que**
la douille (14) présente sur son extrémité située au niveau de la chambre de refoulement (28) de la pompe à pistons, un élargissement (32, 52, 60) qui est poussé de façon étanche par l'élément (36) disposé dans l'alésage cylindrique (12), jusqu'à fixer en direction axiale la douille (14) contre un élargissement complémentaire (34, 66) de l'alésage cylindrique (12).

5. Pompe à pistons selon la revendication 4,
**caractérisée en ce que**
la douille (14) présente sous forme d'élargissement un étage annulaire (58) qui repose dans un gradin annulaire complémentaire (66) sous forme d'élargissement de l'alésage cylindrique (12) et qui est poussé par l'élément (36) disposé dans l'alésage cylindrique (12) en direction axiale contre un bord étanche (68) circulaire formé sur une surface radiale de disque annulaire (70) du gradin annulaire (66) de l'alésage cylindrique (12).

6. Pompe à pistons selon la revendication 5,
**caractérisée en ce que**
la pompe à pistons présente une soupape anti-retour (46) disposée en face du piston (16) dans la chambre de refoulement (28) et qui présente une partie de siège de soupape (64) qui repose entre l'élément (36) disposé dans l'alésage cylindrique (12) et un gradin annulaire (58) de la douille (14) et est poussée par l'élément (36) dans la direction axiale contre ce gradin annulaire (58).

7. Pompe à pistons selon la revendication 6,
**caractérisée en ce que**
la partie de siège de soupape (64) présente un bord étanche (74) circulaire, qui lui permet de reposer sur le gradin annulaire (58) de la douille (14).

8. Pompe à pistons selon la revendication 6,
**caractérisée en ce que**
la partie de siège de soupape (64) présente un bord étanche (78) circulaire, qui lui permet de reposer sur l'élément (36).
